# FASCICULE DE BREVET EUROPEEN

(11) **EP 0 308 355 B1**
(45) Date de publication et mention de la délivrance du brevet: **12.05.1993**
(21) Numéro de dépôt: 88440072.2
(22) Date de dépôt: 31.08.1988
(51) Int. Cl.: A47B 96/20, B32B 3/12

(54) **Elément décoratif autoportant en matériau composite allégé et procédé de fabrication d'éléments autoportants**
Selbsttragendes dekoratives Element aus leichter gemachtem Verbundmaterial und Verfahren zu seiner Herstellung
Self-supporting decorative element made of light-weight composite material, and process for making it

(30) Priorité: 01.09.1987 FR 8712397
(43) Date de publication de la demande: 22.03.1989
(73) Titulaire: SOCIETE DE TRANSFORMATION INDUSTRIELLE DE MATERIELS ORTHOPEDIQUES, MEDICAUX PLASTIQUES SIGLE "TRIOPLAST", F-62400 Bethune (FR)
(72) Inventeur: Duhoo, Marcel, F-62400 Bethune (FR)
(74) Mandataire: Lepage, Jean-Pierre

(56) Documents cités:
- DE-A- 3 328 354
- FR-A- 1 211 122
- FR-A- 1 592 553
- FR-A- 2 102 809
- FR-A- 2 395 823
- GB-A- 1 112 171

## Description

L'invention est relative à un élément décoratif autoportant en matériau composite allégé tel que poutre ou panneau ainsi qu'à un procédé de fabrication d'éléments décoratifs autoportants qui trouveront notamment leurs applications dans le domaine de l'équipement mobilier d'intérieur.

En ce qui concerne les équipements disposés dans les lieux publics, qu'il s'agisse de bâtiments fixes ou de moyens de locomotion tels que voitures de chemin de fer, certaines précautions doivent être prises. En effet, ce matériel est bien souvent mis à rude épreuve aussi sa longévité est étroitement liée à ses propriétés de résistance mécanique. Par exemple, de simples tablettes écritoires qui, dans leur usage traditionnel, n'ont à supporter que de très faibles efforts, doivent pouvoir supporter le poids d'un homme qui s'en servirait comme marchepieds.

De même, pour des raisons de sécurité, le mobilier de lieux publics doit présenter certaines qualifications de résistance au feu.

Les matériaux métalliques ont parfaitement rempli cette fonction à une période où la chimie organique en était à ses débuts. Les pièces en métal après avoir été découpées, pliées usinées, étaient assemblées pour former les objets de mobilier nécessaires au confort des usagers.

Cette technique cependant présente plusieurs inconvénients. Tout d'abord, à moins de réaliser des fabrications en très grande série, il s'agit d'un procédé relativement coûteux en ce sens qu'il nécessite la réalisation de matrices de découpe, de matrices de pliage dont le coût de fabrication est très élevé auquel s'ajoute celui des usinages, et qui ne peut s'amortir qu'avec une quantité de pièces à produire très élevée.

Ensuite, le matériel métallique craint l'oxydation et doit
être régulièrement entretenu pour lutter contre celle-ci. En particulier, il est nécessaire de repeindre périodiquement les objets en vue de leur assurer une protection et également pour des raisons d'esthétique. Il faut également souligner que sur le plan de la sécurité, le métal constitue notamment un danger de par leur déformation permanente en cas d'accident.

De plus, les réalisations métalliques sont pénalisées par leur poids dans certains cas d'utilisations.

Avec les progrès de la technologie des plastiques, de plus en plus d'objets courants sont réalisés dans ce matériau. Sans entrer dans les détails des différentes techniques de mise en oeuvre, on peut néanmoins distinguer les procédés de fabrication par injection des procédés de moulage de matériaux composites notamment avec nappe de renfort en fibres de verre.

Le moulage de matières thermo-durcissables ou l'injection de matières thermo-plastiques permet d'obtenir des objets présentant une esthétique agréable grâce notamment à une grande finesse de réalisation et à leur teinture dans la masse. Toutefois, les propriétés mécaniques obtenues sont médiocres et la dimension des pièces doit être modeste.

On connaît également la technique d'imprégnation à base de résine d'une toile ou d'un non tissé formé selon le profit de l'objet à obtenir et qui est ensuite polymérisé. Cette technique par exemple utilisée pour la réalisation de coque de navire de plaisance permet d'obtenir des produits à haute résistance mécanique avec un coût de fabrication plus élevé que le procédé par injection. Cette technique par imprégnation comporte certaines limites, tout d'abord, elle n'est adaptée que pour la confection de parois minces, ensuite la forme générale doit être conçue pour autoriser après polymérisation, le dégagement du noyau de moulage.

Par ailleurs, on connaît du document FR-A-1.211.222 un élément de structure composée moulée constitué d'un noyau résistant, formé d'une âme en matériau alvéolaire ou cellulaire revêtue de nappes ou parements et enrobé d'une enveloppe en matériau composite décorative assurant l'esthétique de l'élément.

Cependant, dans une telle réalisation, le but du panneau alvéolaire est de créer une contrepression interne et un remplissage intégral de la cavité. A ce sujet, dans le cas des formes particulières, le document préconise de réaliser le noyau à partir de plusieurs pièces à savoir une première pièce de forme générale et deux listeaux en bois placés de part et d'autre.

L'objectif d'une telle structure est d'alléger l'élément mais en aucun cas, on ne parvient à obtenir un élément de grande résistance et non feu.

On connaît également du document GB-A-1.112.171 la construction d'un ensemble d'éléments modulaires de panneaux assemblables sur leurs chants, réalisé à partir d'un panneau sandwich en polypropylène.

Cependant, ce document ne permet pas d'arriver au résultat recherché par la présente demande.

Le but principal de la présente invention est de présenter un élément décoratif autoportant qui réunit les avantages des deux procédés de fabrication précédemment énumérés. En premier lieu, l'élément de la présente invention est esthétique étant donné que sa forme extérieure s'apparente aux pièces obtenues par injection. Ensuite, les propriétés mécaniques sont comparables à celles des objets réalisés par imprégnation.

Par la structure adoptée ainsi que par le choix des matériaux, la présente invention dispose également de propriétés de légèreté et de résistance au feu. Ces atouts sont particulièrement appréciables pour l'équipement de matériels mobiles, qu il s'agisse de voitures de chemin de fer, d'avions ou de bâteaux.

Un soin particulier a été apporté en ce qui concerne les liaisons mécaniques susceptibles d'être refixées sur l'élément décoratif autoportant de la présente invention. En effet, des études ont montré qu'il s'agit traditionnellement du point faible des réalisations.

Un autre but de la présente invention est de présenter un procédé de fabrication d'éléments décoratifs autoportants dans lequel le nombre de moules mis en oeuvre est particulièrement réduit. Traditionnellement, lorsqu'une structure complexe doit être produite, il est nécessaire de réaliser un moule correspondant à chaque étape de la fabrication, ceci afin de tenir compte du nouveau matériau mis en oeuvre qui doit être conformé selon le profil de la pièce à fabriquer.

Dans le cadre de la présente invention, un nombre très limité de moules, généralement un ou deux, est nécessaire pour réaliser une forme complexe, ceci malgré uns structure multiple.

D'autres buts et avantages de la présente invention apparaîtront au cours de la description qui va suivre qui n'est cependant donnée qu'à titre indicatif.

Selon l'invention, l'élément décoratif autoportant en matériau composite allégé, tel que poutre ou panneau, qui trouvera son application dans le domaine de l'équipement mobilier d'intérieur, qui possède des propriétés de haute résistance mécanique et au feu, comprenant un noyau résistant, formé d'une âme en matériau alvéolaire ou cellulaire revêtue de nappes ou parements et enrobé d'une enveloppe en matériau composite décorative assurant l'esthétique de l'élément, est caractérisé par le fait que ledit noyau est composite de type caisson sandwich et formé de :
- l'âme en matériau alvéolaire ou cellulaire thermodéformable,
- un cadre composite qui entoure les chants de l'âme sur laquelle il est surmoulé.

Le procédé de fabrication d'un élément décoratif autoportant en matériau composite allégé, comportant un noyau résistant enrobé d'une enveloppe en matériau composite, est caractérisé par le fait que :
- on confectionne une âme en matériau cellulaire ou alvéolaire thermodéformable,
- on revêt les faces du matériau alvéolaire ou cellulaire de nappes ou parements,
- on entoure les chants de l'âme par un cadre composite surmoulé sur ladite âme,
- on enrobe le noyau ainsi formé de ladite enveloppe extérieure assurant l'esthétique de l'élément.

L'invention sera mieux comprise à la lecture de la description suivante, accompagnée de dessins en annexe parmi lesquels :
- la figure 1 schématise la structure interne d'un élément décoratif autoportant selon la présente invention,
- la figure 2 schématise en vue de coupe la composition du noyau de l'élément décoratif autoportant,
- la figure 3 montre la mise en place de fonctions mécaniques d'assemblage sous forme d'inserts au sein de l'élément décoratif autoportant,
- la figure 4 schématise la mise en place particulière d'une charnière fixée sur le noyau d'un élément décoratif autoportant,
- la figure 5 représente la jonction des pièces constituant l'enveloppe extérieure de l'élément décoratif autoportant de la présente invention.

La présente invention vise un élément décoratif autoportant en matériau composite allégé tel que poutre ou panneau ainsi qu'un procédé de fabrication du dit élément décoratif autoportant. Elle trouvera notamment son application dans le domaine de l'équipement de mobilier d'intérieur.

Le mobilier à usage collectif tel qu'on le rencontre dans les lieux publics doit présenter des propriétés de haute résistance mécanique afin qu'il ne puisse être dégradé rapidement malgré les mauvais traitements généralement rencontrés.

A l'origine, les fabrications en métal étaient traditionnellement utilisées en raison de leurs bonnes propriétés mécaniques et ceci en dépit d'un coût de fabrication élevé mais peu concurrencé à l'époque. Avec le développement des matières plastiques, très rapidement de nombreux objets confectionnés en métal se sont vus remplacés par des articles fabriqués en matériaux plastiques. Le coût de fabrication est plus faible en ce qui concerne les objets de petites dimensions, pour les objets plus volumineux, des difficultés sont rencontrées pour obtenir de bonnes propriétés de résistance mécanique.

Les procédés de fabrication par injection de matériau plastique ou par moulage de matériau thermodurcissable sont bien adaptés pour obtenir des pièces de dimensions modestes disposant de propriétés de résistance mécanique assez faible.

L'esthétique est cependant agréable. En ce qui concerne les pièces de grandes dimensions, on utilise une technique de moulage par imprégnation à base de résine d'une toile ou d'un non tissé par exemple en fibre de verre. Cette technique permet d'aboutir à un produit disposant d excellentes propriétés mécaniques. Il faut cependant que la forme à obtenir soit compatible avec l'utilisation d'un noyau de moulage.

L'élément décoratif autoportant de la présente invention se propose d'associer les avantages de la technique d'injection sur le plan esthétique économique et les avantages de la technique de l'imprégnation sur le plan des propriétés de résistance mécanique.

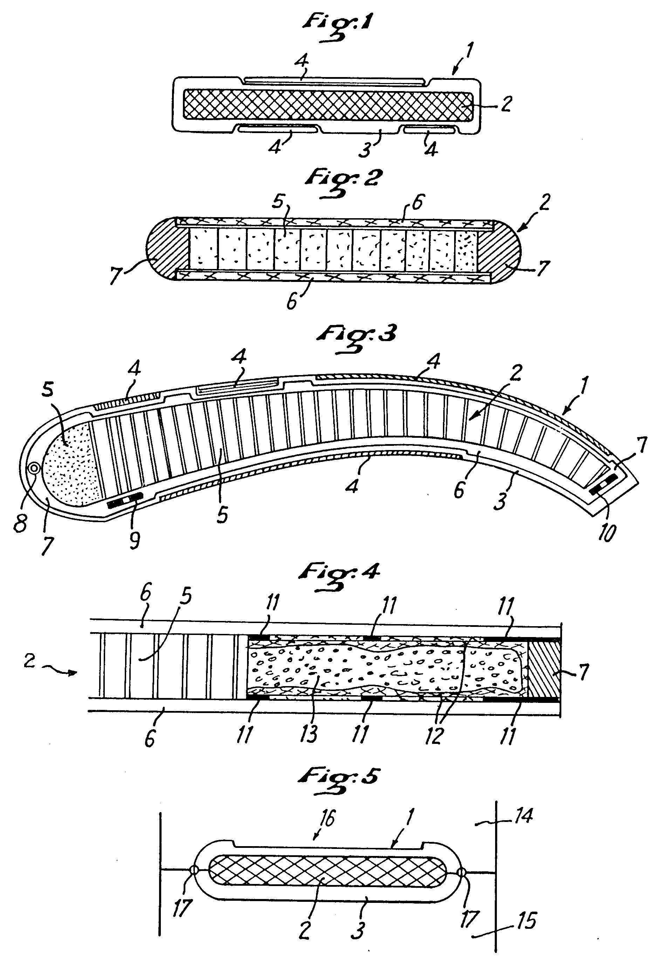

Selon l'invention, l'élément décoratif autoportant 1 tel qu'illustré à la figure 1 en vue de coupe pour illustrer sa structure se compose d'un noyau 2 en matériau composite de type caisson sandwich qui constitue la partie résistante de l'élément 1 et une enveloppe 3 en matériau composite décorative qui assure l'esthétique de l'ensemble.

Alors que le noyau 2 dans les constructions traditionnelles représente une partie passive dont le rôle essentiel est d'alléger la construction, selon la présente invention il s'agit de la partie résistante de l'élément 1. Par souci de légèreté, la constitution du noyau 2 est cependant étudiée pour répondre à cet objectif.

On peut également noter sur la figure 1 la présence d'éléments décoratifs 4 qui sont cloisonnés dans l'enveloppe 3. Ils jouent un rôle décoratif mais pourraient également participer à la résistance mécanique et au feu.

Il faut noter que toutes les fonctions d'assemblage susceptibles d'être mises en place telles que serrures, articulations, charnières ou autres, sont incluses dans le noyau 2.

Pour obtenir les propriétés de légèreté et de résistance mécanique voulues, le noyau 2 présente une structure interne complexe illustrée à la figure 2. En particulier, le noyau 2 se compose d'une âme en matériau alvéolaire ou cellulaire revêtue de nappes ou parements 6 et entourée d'un cadre en matériau composite 7.

L'âme 5 en matériau alvéolaire ou cellulaire peut être réalisée à partir de matériau de type nids d'abeille composite thermodéformable ou en papier imprégné thermodéformable. Les matériaux cellulaires en résine thermoplastique ou thermodurcissable expansée peuvent être également employés, ceux-ci offrant la possibilité d'être thermodéformés.

De bons résultats ont été obtenus en utilisant pour la constitution de l'âme 5 un nid d'abeille en polypropylène extrudé incluant dans ses alvéoles éventuellement une mousse phénolique expansée.

Les faces des matériaux alvéolaires ou cellulaires sont avantageusement revêtues de nappes ou parements imprégnés encore appelés peaux qui lui confèrent ses propriétés de résistance mécanique.

Ces nappes peuvent être notamment réalisées en non tissé de polyester ou encore en film de polyester et non tissé de fibre de verre.

L'âme ainsi formée est enveloppée dans un cadre en composite obtenu par surmoulage à base de résine. Les résines peuvent être des polyesters ou époxys ou plus généralement des thermodurcissables et l'armature en fibres de verre ou aramide ou même éventuellement en fibres de carbone.

Le noyau 2 ainsi obtenu comporte donc une âme alvéolaire 5 légère, deux parements 6 en composite qui procurent de bonnes propriétés de flexion et des chants 7 en composite qui constituent un cadre résistant en compression et procurent des propriétés d'étanchéité au caisson pour les opérations ultérieures de surmoulage de l'enveloppe décorative composite.

Traditionnellement, lorsqu'une forme générale doit être obtenue, les structures en nids d'abeille ou expansées utilisées doivent être usinées ou prémoulées selon la forme à obtenir.

Selon la présente invention, on utilise des matériaux thermodéformables ce qui permet après confection de l'âme, de la thermodéformer selon le profil désiré.

L'opération consiste à chauffer à température voisine du point de fusion du matériau employé, par exemple le propylène et à comprimer le pain à former dans un moule adéquat.

Le noyau 2 est donc moulé à sa forme définitive d'inclusion encore qu'il puisse être usiné pour compléter ses formes ou pour créer des dégagements nécessaires au placement d'inserts mécaniques de fixation qui n'ont pu être positionnés lors du moulage.

La figure 3 représente la mise en place d'inserts mécaniques 8, 9 et 10 au sein d'un élément décoratif autoportant 1, ici une poutre. Les fonctions mécaniques 8, 9 et 10 de type inserts sont greffées sur le noyau 2, plus particulièrement les inserts sont assemblés aux parements 6 à l'aide de colle de structure composite telle que notamment de type polyuréthane ou époxy et reconstituent des liaisons pour la transmission des efforts.

La figure 4 illustre le cas particulier de la fixation d'une charnière 11 sur le chant d'un noyau 2. La charnière présente comme élément de fixation des inserts métalliques 11 dont l'assemblage est obtenu par un composite 12 résine-fibre comprimé sur les parements 6 à l'aide d'un pain de mousse thermoplastique 13 ou thermodurcissable.

L'enveloppe décorative 3 se compose d'un gel coat extérieur déposé dans les deux parties principales 14 et 15 d'un moule fermé qui correspond au profil de la forme extérieure de l'élément décoratif autoportant à fabriquer. En particulier, le moule comprend des formes qui permettent de créer des réserves 16 dans l'élément décoratif 1 autoportant pour permettre la mise en place ultérieure de surfaces décoratives 4.

L'enveloppe décorative 3 peut être moulée par injection de résine thermodurcissable dans un moule fermé où l'on introduit le noyau 2 entouré de l'armature de fibre de l'enveloppe décorative en composite.

L'enveloppe 3 peut également être moulée en plusieurs parties en composite résine-fibre de teintes éventuellement différentes, assemblées autour du noyau 2 à l'aide d'une résine de collage de structure compatible telle que notamment de type polyuréthane ou époxy ou encore polyester.

Le moulage des différentes parties destinées à constituer l'enveloppe 3 forme un joint 17 régulièrement disposé le long du plan de joint des différentes parties. Ce joint peut être de même teinte que le gel coat de l'enveloppe décorative 3 et se confondre avec lui ou il peut également être de couleur différente pour former un filé coloré qui améliore l'esthétique générale.

En ce qui concerne la mise en place des matériaux décoratifs 4 dans les réserves 16 pratiquées dans l'enveloppe 3, il est possible de concevoir la mise en place par collage de pièces juxtaposées en matériaux divers dont la forme est obtenue par usinage ou découpe ou autres.

Il faut souligner qu'en utilisant une colle de structure pour fixer le matériau décoratif 4 sur l'enveloppe 3, il est possible de combler les différences d'épaisseur pour obtenir soit un nivellement parfait de la surface de l'élément décoratif soit des dénivelés contrôlés.

Durant le collage, il est nécessaire de maintenir le matériau décoratif 4 à son niveau, pour cela, on peut utiliser différents procédés tels que le vide, une colle ou un support soluble ou fusible qui maintiennent durant le collage le matériau en place dans une forme appropriée.

Selon le procédé de fabrication d'un élément décoratif autoportant de l'invention, on confectionne une âme en matériau cellulaire ou alvéolaire autour duquel on dispose des nappes de matériau en film ou non tissé. On préforme l'ensemble à chaud et on surmoule l'âme avec un caisson en composite de résine pour former le noyau. On garnit ensuite le noyau d une enveloppe extérieure qui assure l'esthétique de l'ensemble.

## Revendications

1. Elémént décoratif autoportant en matériau composite allégé, tel que poutre ou panneau, qui trouvera son application dans le domaine de l'équipement mobilier d'intérieur, qui possède des propriétés de haute résistance mécanique et au feu, comprenant un noyau (2, 5, 7, 6) résistant, formé d'une âme (5) en matériau alvéolaire ou cellulaire revêtue de nappes ou parements (6) et enrobé d'une enveloppe (3) en matériau composite décorative assurant l'esthétique de l'élément (1), caractérisé par le fait que ledit noyau (2) est composite de type caisson sandwich et formé de :
- l'âme (5) en matériau alvéolaire ou cellulaire thermodéformable,
- un cadre (7) composite qui entoure les chants de l'âme (5) sur laquelle il est surmoulé.

2. Elément décoratif autoportant selon la revendication 1, caractérisé par le fait que le matériau alvéolaire (5) utilisé pour la confection de l'âme est un nid d'abeille en polypropylène extrudé renfermant éventuellement dans ses alvéoles de la mousse phénolique expansée.

3. Elément décoratif autoportant selon la revendication 1, caractérisé par le fait que les nappes ou parements (6) sont en non tissé de polyester ou film polyester et non tissé de fibre de verre.

4. Elément décoratif autoportant selon la revendication 1, caractérisé par le fait que des fonctions mécaniques de type inserts (8, 9 et 10) sont greffées sur le noyau (2) de l'élément (1).

5. Elément décoratif autoportant selon la revendication 1, caractérisé par le fait que l'enveloppe (3) est formée de parties fixées ou moulées autour du noyau (2).

6. Elément décoratif autoportant selon la revendication 5, caractérisé par le fait que la surface de l'enveloppe (3) présente des réserves (7) dans lesquelles sont fixés des matériaux décoratifs (4).

7. Procédé de fabrication d'un élément décoratif autoportant en matériau composite allégé, selon la revendication 1, comportant un noyau résistant (2, 5, 7, 6) enrobé d'une enveloppe (3) en matériau composite, caractérisé par le fait que :
- on confectionne une âme (5) en matériau cellulaire ou alvéolaire thermodéformable,
- on revêt les faces du matériau alvéolaire ou cellulaire (5) de nappes ou parements (6),
- on entoure les chants de l'âme (5) par un cadre (7) composite surmoulé sur ladite âme,
- on enrobe le noyau ainsi formé de ladite enveloppe extérieure assurant l'esthétique de l'élément.

8. Procédé de fabrication selon la revendication 7, caractérisé par le fait qu'avant le surmoulage dudit cadre (7) sur les chants de l'âme (5), on préforme l'âme (5) à chaud.

## Claims

1. Self-supporting decorative element made of a lightened composite material, such as a beam or panel, which will find its application in the field of home furniture and has high mechanical-strength and fire-proof properties, comprising a strong core (2, 5, 7, 6), formed of a web (5) made of alveolate or cellular material coated with sheets or facings (6) and embedded in a cover (3) made of a decorative composite material ensuring the aesthetic aspect of the element (1), characterized in that said core (2) is sandwich-case type composite and formed of:
- the web (5) made of a thermoformable alveolate or cellular material,
- a composite frame (7) which surrounds the edges of the web (5) onto which it is moulded.

2. Self-supporting decorative element according to claim 1, characterized in that the alveolate material (5) used for manufacturing the web is an extruded-polypropylene honeycomb which eventually contains expanded phenolic foam in its alveoles.

3. Self-supporting decorative element according to claim 1, characterized in that the sheets or facings (6) are made of polyester non-woven material or polyester film and fibreglass non-woven material.

4. Self-supporting decorative element according to claim 1, characterized in that insert-type mechanical functions (8, 9 and 10) are grafted onto the core (2) of the element (1).

5. Self-supporting decorative element according to claim 1, characterized in that the cover (3) is formed of portions fixed or moulded around the core (2).

6. Self-supporting decorative element according to claim 5, characterized in that the surface of the cover (3) has recesses (7) into which are fixed decorative materials (4).

7. Process for manufacturing a self-supporting decorative element made of a lightened composite material, according to claim 1, comprising a strong core (2, 5, 7, 6) embedded in a cover (3) made of a composite material, characterized in that:
- a web (5) made of thermoformable cellular or alveolate material is manufactured,
- the faces of the alveolate or cellular material (5) are coated with sheets or facings (6),
- the edges of the web (5) are surrounded with a composite frame (7) moulded onto said web,
- the thus formed core is embedded in said outer cover ensuring the aesthetic aspect of the element.

8. Manufacturing process according to claim 7, characterized in that prior to moulding said frame (7) onto the edges of the web (5), the web (5) is hot pre-shaped.

## Patentansprüche

1. Selbsttragender dekorativer Teil aus erleichtertem Verbundmaterial, wie einem Balken oder Paneel, der seine Anwendung auf dem Gebiet der Innenhausmöbelausstattung finden wird und hohe mechanische Stärke- und Feuerfestigkeitseigenschaften aufweist, umfassend einen widerstandsfähigen Kern (2, 5, 7, 6), der aus einem Herz (5) aus zellenartigem oder zellenförmigem Material gebildet ist, das mit Blättern oder Sichtflächen (6) verkleidet und mit einer Umhüllung (3) aus dekorativem Verbundmaterial umhüllt ist, das die Ästhetik des Teils (1) versichert, dadurch gekennzeichnet, daß der genannte Kern (2) sandwichkastenartig zusammengestellt und aus:
- dem Herz (5) aus thermoverformbarem, zellenartigem oder zellenförmigem Material,
- einem zusammengestellten Rahmen (7), der die Ränder des Herzens (5), auf dem es geformt ist, umschließt,
gebildet ist.

2. Selbsttragender dekorativer Teil nach Anspruch 1, dadurch gekennzeichnet, daß das zum Fertigen des Herzens verwendete zellenförmige Material (5) ein Waffelmuster aus extrudiertem Polypropylen ist, das eventuell Zellphenolharzschaumstoff in dessen Zellen enthält.

3. Selbsttragender dekorativer Teil nach Anspruch 1, dadurch gekennzeichnet, daß die Blätter oder Sichtflächen (6) aus nichtgewebtem Polyesterstoff oder Polyesterfolie und nichtgewebtem Glasfaserstoff sind.

4. Selbsttragender dekorativer Teil nach Anspruch 1, dadurch gekennzeichnet, daß einsatzartige mechanische Funktionen (8, 9 und 10) am Kern (2) des Teils (1) aufgepropft sind.

5. Selbsttragender dekorativer Teil nach Anspruch 1, dadurch gekennzeichnet, daß die Umhüllung (3) aus um den Kern (2) herum befestigten oder geformten Teilen besteht.

6. Selbsttragender dekorativer Teil nach Anspruch 5, dadurch gekennzeichnet, daß die Oberfläche der Umhüllung (3) Aussparungen (7) aufweist, in denen dekorative Materialien (4) befestigt sind.

7. Verfahren zum Herstellen eines selbsttragenden dekorativen Teils aus erleichtertem Verbundmaterial, nach Anspruch 1, umfassend einen widerstandsfähigen Kern (2, 5, 7, 6), der in einer Umhüllung (3) aus Verbundmaterial umhüllt ist, dadurch gekennzeichnet, daß:
- ein Herz (5) aus thermoverformbarem, zellenförmigem oder zellenartigem Material gefertigt wird,
- die Flächen des zellenartigen oder zellenförmigen Materials (5) mit Blättern oder Sichtflächen (6) verkleidet werden,
- die Ränder des Herzens (5) mit einem auf dem Herzen geformten, zusammengestellten Rahmen (7) umgeben werden,
- der also gebildete Kern in der genannten Außenumhüllung, die die Ästhetik des Teils sichert, umhüllt wird.

8. Herstellungsverfahren nach Anspruch 7, dadurch gekennzeichnet, daß das Herz (5) vor dem Formen des genannten Rahmens (7) auf die Ränder des Herzens (5) heißvorgeformt wird.
